# EUROPEAN PATENT APPLICATION

(11) **EP 1 127 651 A1**
(43) Date of publication of application: **29.08.2001**
(21) Application number: 01301056.6
(22) Date of filing: 07.02.2001
(51) Int. Cl.: B23K 26/34, B23K 26/42, F01D 5/00, B23K 1/005, B23P 6/00

(54) **Method and apparatus for increasing cladding or welding rates**

(30) Priority: 07.02.2000 US 498984
(71) Applicant: General Electric Company, Schenectady, NY 12345 (US)
(72) Inventor: Jones, Marshall Gordon, Scotia, New York 12302 (US); Erikson, Carl Edward, Schenectady, New York 12308-5918 (US); Mundra, Kamlesh, Niskayuna, New York 12309 (US)
(74) Representative: Pedder, James Cuthbert

(57) **Abstract**

In a method and apparatus for securing an item (22) to a surface (20), the item (22) is preheated and positioned to make contact with the surface (20). A laser beam (18) is then directed at the point of contact between the item (22) and the surface (20). The energy and time required for the laser beam (18) to melt the item (22) is reduced as the item (22) being secured is preheated.

## Description

The present invention relates to a method and apparatus for increasing cladding or welding rates.

There are many traditional welding processes that use a wire feed. However, and in applications where crack sensitive materials are involved, these processes typically apply too much heat and accordingly, the process leads to unwanted defects.

In other processes, the wire is an auxiliary feed wire (a TIG process). However, these processes require more time.

Currently, and in order to minimize defect formation, the crack sensitive alloys are maintained at an elevated temperature during the complete cladding process. This process is known as WRAP in GEPS and SWET in GEAE. However, when rebuilding the tip of a gas turbine airfoil (e.g. GTD111) this process could take several hours at elevated temperatures. Moreover, this is a manual process, which does not provide an operator friendly environment.

Other materials, such as IN738, are cycled between low and high temperatures to avoid having the component at elevated temperatures too long and thus, minimize defects and component distortion. However, such a cyclic process extends the processing times required to affect the required clad buildup.

In first embodiment of the present invention, a method for flowing an item on a surface is disclosed.

The item is preheated. A laser beam is directed at the point of contact between the item and the surface, the laser beam melting and securing the item to the surface.

In a second embodiment of the present invention, a method for joining two items together is disclosed.

A welding material is preheated, the welding material having a portion positioned within an opening defined by the items. A laser beam is directed at the welding material portion melting it and securing the items together.

In a third embodiment of the present invention, apparatus for securing two items together is disclosed.

A laser provides a laser beam directed at a point of contact on an item, the item being capable of movement in a first direction. A wire is capable of being continuously fed in the first direction. A power supply provides a current to the wire. A guide directs the wire to the point of contact, the laser beam continuously securing the wire to the item at the point of contact.

The invention will now be described in greater detail, by way of example, with reference to the drawings, in which:-
Figure 1 is a front perspective view illustrating the cladding process of an embodiment of the present invention;
Figure 2 is a side view of the Figure 1 embodiment;
Figure 3 is a front perspective view illustrating the welding process of an alternative embodiment of the present invention; and
Figure 4 is a view along the lines 4-4 of the Figure 3 embodiment.

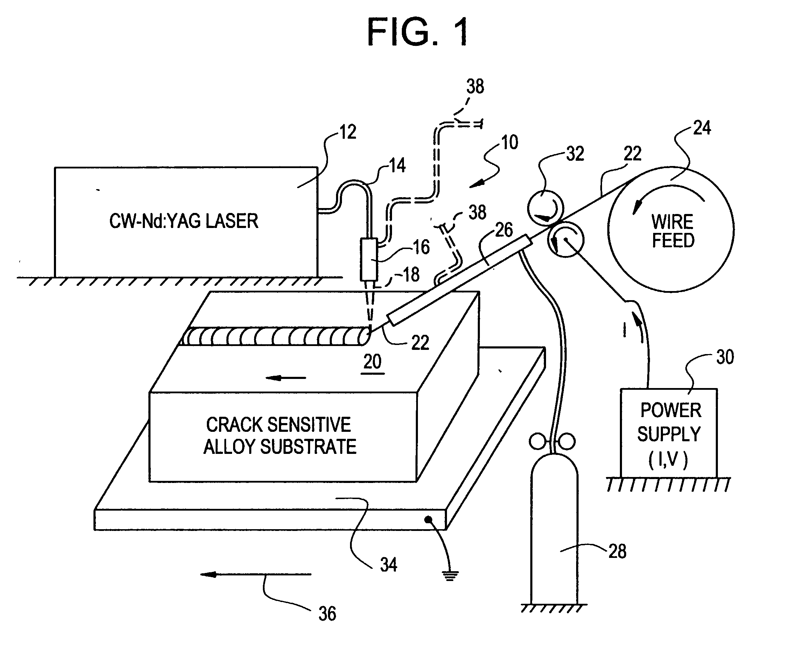

Referring now to Figure 1, a cladding system 10 for use in accordance with the instant application is illustrated. Cladding system 10 includes a laser 12. Laser 12 is a CW Nd:YAG laser capable of being operated at various power levels. A fiber optic cable 14 is secured to laser 12 at one end and a fiber optic coupler 16 at the other. Fiber optic coupler 16 contains optics for focusing a laser beam 18 at an intended target.

Here laser beam 18 is directed at a substrate 20 to which a wire 22 is to be flowed by the cladding or welding process of the instant application.

In accordance with the instant application, it is contemplated that substrate 20 is a crack sensitive alloy substrate such as, GTD111, GTD222 and IN738 which are susceptible to deformation and cracking when exposed to high temperatures for extended periods of time. Of course, it is contemplated that the apparatus and method of the instant application may be applied to various other substrates.

Wire 22 is fed to substrate 20 by a wire feed device 24 that directs wire 22 through an elongated tube 26. Tube 26 also serves as a guide to direct wire 22 to its point of contact with substrate 20.

Tube 26 is also coupled to a gas supply 28 wherein an inert gas such as argon, helium, nitrogen etc. is introduced into tube 26 and tube 26 is configured so that the inert gas is outputted at the point where laser beam 18 flows wire 22 on substrate 20. The inert gas introduced by tube 26 into the welding area is used to shield the weld from outside contaminants and gases that may react with the weld. For example, the inert gas provides an atmosphere around the welding process of laser beam 18 whereby oxygen is removed to prevent unwanted side effects such as oxidation and cracking.

A power supply 30 provides a current to wire 22 through the use of drive wheels 32 in order to raise the temperature of wire 22. Drive wheels 32 complete the circuit from power supply 30 to wire 22. In accordance with Ohm's law, and as power supply 30 increases the current through wire 22 the temperature of the wire 22 also increases because of IR (current times resistance) heating. Power supply 30 increases the temperature within wire 22 to a typical temperature of 500° Celsius or a temperature lower than the melting temperature of the wire used. Moreover, wire 22 should not be heated to a temperature that will cause the wire to lose its stiffness. Of course, it is contemplated that other temperatures and temperature ranges may be employed.

Drive wheels 32 are in a facing spaced relationship and are positioned to draw wire 22 from wire feed 24. Alternatively, a single drive wheel 32 and appropriately positioned guide pin also provide the driving force to wire 22. Drive wheels 32 are mechanically driven by a variable speed motor (not shown). The motor speed, and accordingly, the speed of drive wheels 32 can be controlled in order to vary the rate at which wire 22 is fed to substrate 20. Moreover, the activation, and accordingly, the speed at which drive wheels 32 rotate can be controlled by a controller, which employs a programmable computer algorithm.

In addition, power supply 30 provides a means for varying the temperature within wire 22. Moreover, the intrinsic characteristics of wire 22 such as material type, size (i.e. diameter) and length can be introduced into a controller, which also is provided with the voltage and current supply to wire 22 to easily provide a means for producing a certain temperature within wire 22.

Of course, it is contemplated that the required temperature of wire 22 will vary in accordance with the type of wire (i.e. size and material) used, the type of substrate and the required cladding temperature.

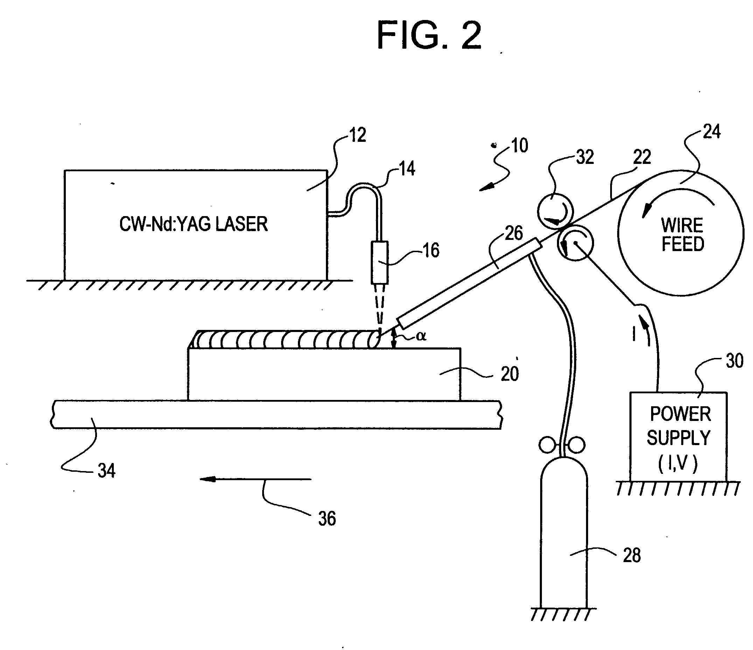

Referring now in particular to Figures 1 and 2, it is preferred that the portion of wire 22 being flowed on substrate 20 is arranged at an angle ∀. Angle ∀ is preferably 15-30°. It is, of course, contemplated that angle sizes greater than 30° and less than 15° can be employed. Laser 12 generates laser beam 18 that is focused upon the point of contact between wire 22 and substrate 20.

At the point of contact, laser beam 18 provides additional heat to wire 22 and accordingly wire 22 is melted and thus flowed on substrate 20. It is noted that wire 22 also acts as a "filler rod" whereby wire 22 is consumable and provides the material for creating a weld. Since wire 22 is already preheated by power supply 30 no excess energy of laser beam 18 is wasted upon heating wire 22. Therefore a significant amount, if not all, of the energy of laser beam 18 is devoted to the cladding of wire 22 to substrate 20. Moreover, and since wire 22 is already preheated, the portion of substrate 20, to which wire 22 is being flowed upon, is not overheated and accordingly, there is less likelihood of defects due to overheating.

In addition, and since the majority of the laser power is devoted to bringing the temperature of wire 22 from a pre-heated temperature to a melting temperature, the cladding rate is much faster. Additionally, the power acquired from laser 12 is also lower and accordingly, a lower power and lower cost laser can be used.

The power level use of laser 12 is also dependent upon the wire feed rate, the substrate surface travel speed and the wire diameter. For example, if the wire feed rate and substrate surface travel speed is increased, the power of laser 12 will have to be increased accordingly. On the other hand, if the size of wire 22 is increased the resulting power output of laser 12 will also have to be increased.

Substrate 20 is secured to a translation table 34, which provides a means for moving substrate 20 in a controlled fashion. As illustrated in Figure 1, substrate 20 is moved in the direction of arrow 36. This movement causes wire 22 to be flowed on substrate 20 as it passes underneath laser beam 24.

However, substrate 20 may be moved in any direction that will facilitate the cladding of wire 22 to substrate 20.

A controller (not shown) is used to synchronize the operation of laser 12, wire feed 24 and translation table 34 such that once the cladding system is engaged the laser will continuously clad wire 22 onto substrate 20. Moreover, the controller will utilize a computer algorithm into which operating parameters can be programmed. For example, a clad of 20 mm in a given direction can be programmed whereby the system will shut down once translation table 34 and wire feed 24 have inputted 20 mm of wire through laser beam 24. It is, of course, contemplated that welds greater than or less than 20 mm can be programmed into the system.

In addition, other aspects may be inputted into the computer algorithm such as the desired pre-heating temperature of wire 22 prior to the activation of system 10.

As an alternative and/or a supplement to translation table 34, a robot arm 38 coupled to a robot (not shown) will provide the necessary movement of fiber optic coupler 16 and a wire feed system in order to direct laser beam 18 at the appropriate location in order to facilitate the clad of wire 22 to substrate 20. Alternatively, a pair of robot arms 38 may be employed wherein a first arm manipulates fiber optic coupler 16 and the second arm manipulates the wire guide or elongated tube 26 in order to direct the point of contact between wire 22 and substrate 20.

Moreover, the movement of the robot arm can be inputted into the controller or computer algorithm wherein predetermined clads or welds can be preprogrammed.

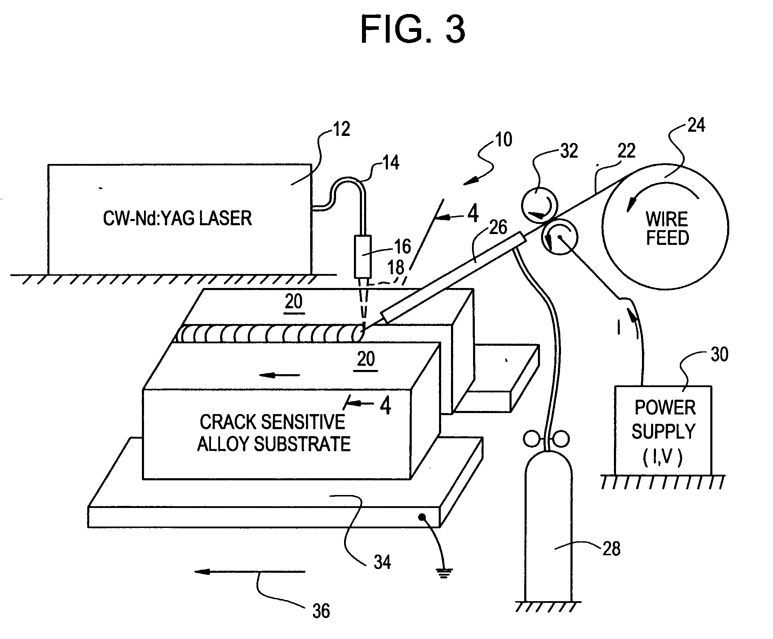

Referring now to Figure 3, an alternative embodiment of the instant application is illustrated. Here two crack sensitive substrates 20 are being secured to each other. Alternatively, only one (or none) of the substrates 20 may be crack sensitive.

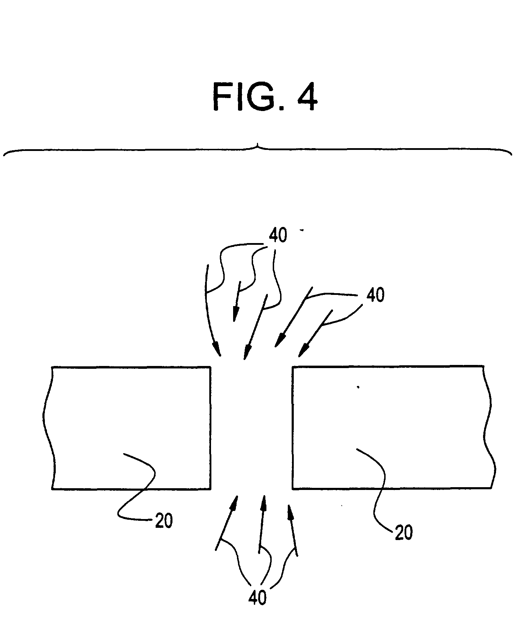

In this embodiment wire 22 is melted by a laser beam 18 to secure substrates 20 to each other. Referring now to Figure 4, and depending on the weld application, the inert gas, as indicated by arrows 40, will have to be introduced to both sides of substrates 20 at the point of the weld. The inclusion of the inert gas, as indicated above, protects the weld from outside contaminants.

## Claims

1. A method of flowing an item on a surface (20), said method comprising:
a) preheating said item, said item being configured, dimensioned and positioned to make a point of contact with said surface; and
b) directing a laser beam (18) at said point of contact between said item and said surface, said laser beam melting and securing said item to said surface.

2. The method as in claim 1, wherein said item is continuously fed to said surface in a first direction and said surface is also moved in said first direction.

3. The method as in claim 2, wherein the movement of said surface, the activation of said laser beam and the speed at which said wire is fed to said surface is controlled by a controller employing a computer algorithm.

4. The method as in claim 1, 2 or 3, wherein said item is a wire (22).

5. The method as in claim 4, wherein said wire is preheated to a temperature less than 500 ° Celsius.

6. A method of joining two items together, said method comprising:
a) preheating a welding material (22), said welding material being configured, dimensioned and positioned to have a portion thereof positioned within an opening, said opening being defined by said items (20); and
b) directing a laser beam (18) at said portion of said welding material and said laser beam melting said welding material and securing said items together.

7. The method as in claim 6, wherein said welding material is a wire that is continuously fed into said laser beam.

8. An apparatus for securing two items together, comprising:
a) a laser (12) providing a laser beam (18), said laser beam being directed at a point of contact on an item (20), said item being capable of movement in a first direction;
b) a wire (22) being capable of being continuously fed in said first direction;
c) a power supply (30) for providing a current to said wire; and
d) a guide (26) for directing said wire to said point of contact, said laser beam continuously securing said wire to said item at said point of contact as said wire and said item moves in said first direction.

9. The apparatus as in claim 8, further comprising:
e) a robot arm (38) being coupled to said laser, said robot arm being capable of redirecting said laser.

10. The apparatus as in claim 9, wherein the activation of said laser beam and the speed at which said wire is fed to said surface is controlled by a controller employing a computer algorithm.

11. The apparatus as in claim 10, wherein the activation of said robot arm is also controlled by said controller.
